# EUROPEAN PATENT SPECIFICATION

(11) **EP 2 134 820 B1**
(45) Date of publication and mention of the grant of the patent: **21.09.2011**
(21) Application number: 08707246.8
(22) Date of filing: 24.01.2008
(51) Int. Cl.: C10L 5/40, C10L 5/44, C10L 5/46, C10L 5/48, D21C 9/18, F26B 3/02

(54) **PROCESS FOR DRYING AND PURIFYING A PARTICULATE CELLULOSE/PLASTIC WASTE MIXTURE**
VERFAHREN ZUM TROCKNEN UND REINIGEN EINES TEILCHENFÖRMIGEN CELLULOSE/KUNSTSTOFF-ABFALLGEMISCHS
PROCÉDÉ DE SÉCHAGE ET DE PURIFICATION D'UN MÉLANGE PARTICULAIRE DE DÉCHETS DE CELLULOSE/PLASTIQUE

(30) Priority: 07.03.2007 WO PCT/EP2007/001955
(43) Date of publication of application: 23.12.2009
(73) Proprietor: DSM IP Assets B.V., 6411 TE Heerlen (NL)
(72) Inventor: SCHOEN, Löwhardt, Adolf, Albert, NL-6176 BT Spaubeek (NL); CHRISTOFFEL, Anton, Rudolf, NL-6243 CA Geulle (NL); VAN DER LINDEN, Alfons, Matheas, Gertrudes, NL-6005 LC Weert (NL)
(74) Representative: Kirk, Martin John
(86) International application number: PCT/EP2008/000535
(87) International publication number: WO 2008/107044

(56) References cited:
- EP-A- 0 359 458
- EP-A- 1 083 212
- WO-A-00/67970
- WO-A-90/12103
- US-A- 3 256 614
- US-A- 4 253 822
- US-A- 4 298 350

## Description

The present invention relates to a method for processing a particulate cellulose/plastic waste mixture comprising cellulosic and thermoplastic materials.

Cellulose/plastic waste mixtures originate, for example, from domestic, urban or municipal waste as well as from industrial waste, e.g. waste from a paper recycle process. In the latter case the waste mixture, the so-called "paper-reject", is obtained after pulping and separation of paper pulp in the paper recycle process (from e.g. urban or municipal waste) and still comprises paper remnants in addition to plastic and up to 50 wt% of water. Cellulose/plastic waste mixtures can be processed into useful fuel, preferably secondary fuel for combustion furnaces that is used next to coal as primary fuel. The treatment of the cellulose/plastic waste mixture in order to obtain a combustible material includes dewatering and purification steps. Conventionally, the major amount of water of the cellulose/plastic waste mixture is removed by pressing and evaporation. The dried mixture can either be combusted as such (as "fluff"), but preferably this mixture is converted into a pelletized fuel, e.g. according to the teachings of EP-A-1,083,212. US 4 298 350 discloses a process for chying and purifying a mixture of cellulose and plastic.

Whether the waste stream is used as fluff, or in the form of pellets, it is important that for use as fuel, a low amount of ash forming waste materials is present and the product is well dried. It is an object of the invention to provide an optimized process for obtaining a plastic/cellulose product that has good caloric value and low ash content.

The object is met by a method for processing a particulate cellulose/plastic waste mixture comprising cellulosic and thermoplastic materials as in claim 1, the method comprising the steps:
(a) drying the cellulose/plastic waste mixture by treatment with a hot gaseous medium having a temperature in the range of 425 to 525 K (152 to 252°C)
(b) passing the dried cellulose/plastic waste mixture and the gaseous medium having a temperature of about 390 K (117°C) or lower to a purification stage, and
(c) subjecting the dried cellulose/plastic waste mixture to the action of the purification stage in order to separate particles heavier than the particles made of cellulosic and thermoplastic materials,
wherein the purification stage comprises a wind sifter, a sieve or a combination thereof.

Preferably, the vessel used in step (a) is a tubular vessel that is oriented approximately horizontally.

Preferably, the tubular vessel is rotating along its horizontal axis.

Preferably, the horizontal axis of the tubular vessel is inclined downwards in the direction of the flow of the gaseous medium at a maximum angle of 30° and particles that are heavier and have better rolling behavior than the cellulosic and thermoplastic material roll and move downward inside the tubular vessel and are separated from the cellulose/plastic waste mixture at the outlet of the tubular vessel.

Preferably, the materials heavier than the cellulosic and thermoplastic material comprise metals, stones, ceramics, glass or thermosetting plastics.

Preferably, the method further comprises (d), separating the purified cellulose/plastic mixture and the gaseous medium by the action of a cyclone.

Preferably, the separated gaseous medium resulting from step (d) is at least partially recycled to the gaseous medium used in step (a).

Preferably, the water content of the recycled gaseous medium is reduced.

Preferably, the gaseous medium entering step (a) has a temperature within the range of from 425 to 500 K.

Preferably, the gaseous medium exiting the drying step and being passed to the wind sifter in step (b) has a temperature within the range of from 325 to 370 K.

Preferably, the gaseous medium used in step (a) has an oxygen content of from 5 to 16 volume %.

Preferably, the gaseous medium is obtained by burning a hydrocarbon with air.

Preferably, wherein the hydrocarbon is natural gas or liquefied petroleum gas (LPG).

Preferably the water content of the cellulose/plastic waste mixture in step (a) is reduced to 15 wt% or less.

Preferably, the water content of the cellulose/plastic waste mixture in step (a) is reduced to a value of about 2 wt% or more.

Preferably, the water content of the cellulose/plastic waste mixture in step (a) is reduced to 5 wt% or less.

Preferably, the cellulosic material in the cellulose/plastic waste mixture mainly originates from paper and/or cardboard.

The thermoplastic material in the cellulose/plastic waste mixture is mainly based on polyethylene as defined in claim 1.

Preferably, the cellulose/plastic waste mixture consists of particles having a maximum particle size of about 150 mm or less before entering in step (a).

Preferably, the cellulose/plastic waste mixture is comminuted to particles having a maximum particle size of less than 50 mm, preferably less than 40 mm and more preferably less than 30 mm after step (d).

Preferably, the method further comprises (e) compacting the purified cellulose/plastic mixture.

Preferably, the compacting in step (e) is performed in a pelletizing device producing pellets having a maximum diameter of 10 mm.

Preferably the method further comprises (f) comminuting the pellets resulting from step (e) to obtain a powder.

Preferably, the pellets in step (f) are ground by means of an air turbulence mill.

### Short description of the figures:

Figure 1 depicts a dryer and windsifter according to the present Invention.
Figure 2 depicts a scheme to treat waste streams in order to obtain fluffy material that can be used as fuel or can be further processed to fuel pellets.

The particulate cellulose/plastic waste mixture for use in the present method can be any waste mixture comprising cellulosic and thermoplastic materials as defined in claim 1. Typically, the cellulosic and thermoplastic materials are the major components of the waste mixture and preferably, they constitute a total of at least 60 wt% of the waste mixture, more preferably at least 70 wt%, and most preferably at least 80 wt%, each based on total solid components. However, pretreated waste-streams can be used, that contain about 90 wt% or more, or even about 95 wt% of cellulose/plastic waste material. If the waste stream is derived from municipal waste, some organic material may be present that can be taken as equivalent to cellulose fibre for the purpose of this invention. Preferably, the organic component (excluding cellulose based waste, such as paper and cardboard) of the waste material is less than 20 wt%, preferably less than 10 wt%, and more preferably less than 5 wt%.

In a preferred embodiment of the present invention, waste streams are treated before entering the drying step.

Preferably, at least heavy, large and/or non-combustible material is removed, including large stones, concrete, ashes, carpets and the like. In order to achieve this, screening may be suitable, as well as sorting on a picking belt. This step generally is not necessary for paper-reject waste streams. Furthermore, waste streams are available from waste handling companies that do not comprise such large material.

In a further pre-treatment step, the waste is treated in a cutting apparatus to have particulate matter of certain size, like for example all parts below 200 mm, preferably about 150 or lower, like for example about 100, about 120 or about 80 mm. The size is generally given as length, which means that 95 wt% of the matter has a maximum size in one dimension of the stated length. It is possible to cut to even smaller pieces (e.g. less than 20 mm), but this is not preferred because of the presence of quite some remainders of hard materials like glass, stone etc which may cause damage to the cutting apparatus. Generally, in this part of the process, the cutting is performed to pieces of about 60 mm or larger, preferably, about 80 mm or larger. Of course, the waste stream will always have smaller parts, but these are not necessarily cut in the cutting apparatus. At this stage, preferably, metal parts can be removed with a magnet and Eddy-current device.

Generally, the cellulose/plastic waste mixture originates from domestic waste (including municipal and urban waste) and/or industrial waste streams. The cellulosic material may originate from, for example, paper, cardboard, beverage cartons, wood, diapers, bandages, and textiles such as cotton, viscose and rayon. The cellulose material may comprise organic material, like remainders of bread, meat, vegetables etc, which will be effectively treated like cellulose fibre.

The thermoplastic material may originate from, for example, packing material such as polymeric sheet or film material. In principle, all types of thermoplastic polymers can be present in the cellulose/plastic mixture. Examples of thermoplastic polymers that are generally present include (substituted) polyolefins; polystyrene; polyesters, such as polyethylenterephthalate (PET); polyamides, and copolymers and blends thereof. The thermoplastic material may also comprise halogenated polymers such as poly(vinyl chloride) (PVC) although this is not preferred. In a preferred embodiment, most of the chlorine containing polymeric material is removed.

In particular, the method of the present invention is suited when the thermoplastic material in the cellulose/plastic waste mixture is mainly based on polyethylene homo- and/or copolymers. At least 60 wt%, preferably at least 70 wt%, more preferably at least 75 wt%, and most preferably at least 80 wt% of the thermoplastic material are polyethylene homo- and/or copolymers. Also, the method of the present invention is well suited in those situations where the cellulosic material in the cellulose/plastic waste mixture is mainly based on paper and/or cardboard. One example of an industrial waste stream that may be processed to obtain a cellulose/plastic waste mixture for use in the present invention is the "paper-reject" obtained after separation of the majority of the paper pulp in the paper recycle process. This waste stream, like municipal waste streams, contain large plastic foils, stones, metal, sand and other unwanted materials.

Typically, the particulate cellulose/plastic waste mixture for use in the present method comprises 5 to 85 wt% of thermoplastic material and 15 to 95 % of cellulosic material, preferably 10 to 85 wt% of thermoplastic material and 15 to 90 % of cellulosic material, each based on the total dry weight of cellulosic and thermoplastic materials. The exact compositional limits of the mixture will be dependent upon the starting moisture content of the mixture and the desired target moisture of the mixture exiting the dryer.

In one embodiment, the method of the present invention is useful for a cellulose/plastic waste mixture in which a shortage of thermoplastic material is present, preferably comprising from 5 and to less than 60 wt% (so a cellulose-rich mixture). Preferably, the lower limit of thermoplastic material is at least 10 wt%, preferably at least 20 wt% and more preferably at least 30 wt% relative to the total weight of the waste mixture. It has been surprisingly found that the interaction of the cellulose and plastic components in the dryer enables the gaseous medium to be significantly higher than the melting point of at least a portion of the plastic component (eg. polyethylene), such that no smearing of the plastic component on the equipment surfaces is observed, while at the same time producing a dried waste mixture with a low moisture content. Under this aspect of the present invention, the weight ratio of cellulose to plastic material is preferably at least 2:3.

In another embodiment of the invention, the method of the present invention is useful for cellulose/plastic mixtures where the content of thermoplastic material is at least 40 wt%.

With these embodiments, both a low caloric as well as a high caloric fuel can be obtained from the cellulose/plastic waste mixture. It can be of advantage to remove, prior to the treatment of the present invention, from a cellulose/plastic waste mixture having a content of thermoplastic material of at least 40 wt% at least a part of potentially valuable thermoplastic material, as a result of which a mixture comprising less than 40 wt% thermoplastic material is obtained. Conversely, it may be desired in some instances to add some typically chlorine-free thermoplastic material prior to the treatment of the present invention in order to increase the calorific value of the fuel obtained from the cellulose/plastic waste mixture and/or to lower the chlorine content of the cellulose/plastic waste mixture.

In yet another embodiment, the method of the present invention is useful for a cellulose/plastic waste mixture in which the cellulose represents 30 to 60 wt%, and the thermoplastic material represents 70 to 40 wt%. There is a specific need for efficient treatment of such mixed waste stream, as it is difficult to separate out either cellulose or plastic in an efficient way.

In addition to the cellulosic and thermoplastic materials the particulate cellulose/plastic waste mixture for use in the present method comprises other materials, such as metals, stones, e.g. sand, ceramics, or glass. It is an advantage of the present process, that these contaminants can be removed efficiently because they may hinder the further processing of the cellulose/plastic waste mixture, e.g. a pelletizing step, and in order to obtain useful fuel. As these materials are non-combustible (also called "non-combustible materials" in the following) they lower the calorific value of the fuel and increase the ash content. The cellulose/plastic waste mixture may also contain thermosetting materials which are typically combustible and thus need not be removed.

The water content of the particulate cellulose/plastic waste mixture to be used in the present process has 15 wt% or more, based on the total weight of the cellulose/plastic waste mixture. Generally, the waste streams contain 20-65 wt% of water, mostly depending on the source and the amount of cellulose material. If the water content of the particulate cellulose/plastic waste mixture is too low (for example less than 15weight %), the temperature of the waste mixture exiting the dryer, smearing of plastic on equipment surfaces occur. If the water content of the particulate cellulose/plastic waste mixture is too high, for example, if it originates from a paper recycle process, it preferably is pretreated by mechanical pressing in order to reduce the water content prior to the drying in step (a). This avoids the use of too much heat for the evaporation of the water in step (a). A mechanical dewatering step enables dewatering to about 20-50wt%. Preferably, the water content of the cellulose/plastic waste mixture entering step (a) of the present method is at most 45 wt%, more preferably at most 40 wt%, even more preferably at most 35 wt%, and most preferable about 30 weight% or less. With mechanical treatment of paper-reject streams it is generally possible to arrive at a moisture content of about 45 wt%, preferably 40 wt% or lower, and more preferably about 30 wt%, e.g. 25-35 wt%.

The drying step (a) comprises the step of drying the cellulose/plastic waste mixture by treatment with a hot gaseous medium having a temperature of about 525 K or lower, preferably, about 500 K or lower. The temperature of the hot gaseous medium will be about 425 K or higher.

This step in the process of the present method can be performed in any equipment that is suited for drying a water-containing particulate cellulose/plastic mixture with the use of a hot gaseous medium. Generally, heating by using a hot gaseous medium is denoted as direct heating. If desired, indirect heating (by heating through the wall of the vessel) may be used in addition to direct heating. Preferably, the cellulose/plastic waste mixture and the gaseous medium are co-currently passed through a vessel. The cellulose/plastic waste mixture and the hot gaseous medium typically enter on one side and leave the other side of the vessel in combined streams.

More preferably, the drying is performed in an approximately horizontally oriented tubular vessel. "Approximately horizontal orientation" includes horizontal orientation of the vessel and a slight inclination downwards in the direction of the flow of the gaseous medium at a maximum angle of 30°. Preferably, the inclination will be between 5 and 10°.The slight inclination of the tubular vessel allows a first separation of non-combustible materials: particles that are heavier and have better rolling behavior than the particles made of cellulosic and thermoplastic material roll and move downward inside the tubular vessel and may be separated from the cellulose/plastic waste mixture at the outlet of the tubular vessel. The exact inclination angle of the tubular vessel is adjusted depending on the type of non-combustible material to be separated.

In a preferred embodiment of the invention, the dryer is designed to achieve a residence time of the particulate material of about 20 min or more, preferably about 40 min or more. Generally, a residence time of about 2 hr or less is used for economic reasons.

In a further preferred embodiment of the invention, the residence time of the hot gaseous medium is about 3 sec or more, preferably about 6 seconds or more. Generally, a residence time of about 5 min or less is used to achieve useful drying, preferably about 100 sec or less, and even more preferably about 30 sec or less.

In order to achieve optimal conditions for the evaporation process inside the drying apparatus, the contents are preferably mechanically mixed and stirred. This can be done by rotating the vessel along its horizontal axis, or by means of an internal rotating stirrer. The vessel may preferably be equipped with baffles to promote the mixing of the gaseous medium and the cellulose/plastic particles.

The gaseous medium used in drying step (a) of the present method has a temperature of about 525 K or lower. Preferably, the maximum temperature of the gaseous medium and the cellulose/plastic waste mixture is 500 K or lower. Typically, the entry temperature of the gaseous medium is at least 425 K. A temperature within this bandwidth results in efficient drying while precluding unwarranted melt of plastic materials. This is quite surprising as the temperature of the hot medium is well above the melting temperature of, in particular, polyethylene. Despite this high temperature, no smearing is observed.

In a further preferred embodiment of the present invention, the gaseous medium used to heat the particulate cellulose/plastic waste mixture in step (a) has a reduced oxygen content compared to that of air. The oxygen content in the mixture is preferably about 16 volume % or less, preferably 15 volume % or less, and more preferably about 14 volume % or less. Generally, the amount of oxygen will be greater than 3 volume %, preferably greater than 5 volume % and more preferably about 7 volume % or more for practical reasons and to avoid the formation of toxic carbon monoxide. A maximum oxygen content of 16 volume % further ensures a proper condition for avoiding spontaneous burning or explosion of the cellulose/plastic waste mixture in the drying unit. However, a slightly lower amount, like 15 or 14% is preferred in order to execute a completely safe process. Monitoring means to control this oxygen content are known as such, and are ones, that can be used for process control. Preferably, the oxygen content is controlled in the gaseous medium leaving the drying vessel.

In another embodiment of the invention, the effective oxygen content is about 16% or lower. Preferably, the effective oxygen content has the values described in the former paragraphs. The effective oxygen content is the oxygen content if mixed with nitrogen only. However, like in the present process, the hot gaseous medium is a mixture of carbon-dioxide, water, oxygen and nitrogen. In such a mixture, explosion or fire is less likely. Hence, the actual content of oxygen may be higher to still have reduced or no risk of explosion. For example, with a gas mixture of 9 vol% carbon-dioxide, 19 vol% water, and 72 vol% nitrogen (together 100%), one can add 18% oxygen to have the same explosion risk as 16% oxygen and 84% nitrogen.

In a further preferred embodiment of the invention, the drying part is equipped with an apparatus to measure hydrogen and / or carbon-monoxide. These gases can exist in the process, especially at low oxygen levels, in case the fuel in the burner to heat the gaseous medium is not completely burned. It is preferred that the concentration of unburned gas like hydrogen or carbon monoxide is about 2 vol% or lower.

The origin and composition of the gaseous medium used for drying in step (a) can be chosen freely. It is understood that the gaseous medium preferably does not contain other components that may react with the cellulose/plastic waste mixture. A suitable gaseous medium can be achieved by lowering the oxygen content in air by as such known means.

Preferably, the gaseous medium is obtained by burning a hydrocarbon with air. This results in a heated gaseous medium with a reduced oxygen content, of which both the temperature and the oxygen content can be controlled as specified. Preferably, this hydrocarbon is natural gas or liquefied petroleum gas (LPG). The temperature of the gaseous medium (425 to 525 K) may be obtained through heating a preheated gaseous medium with the use of steam or any other heat source through conventional heat exchange techniques.

An oxygen-free gaseous medium can also be employed, for example a heated inert gas, such as heated nitrogen. Heating of an inert gas can be done through a heat exchanger. The use of an oxygen-free gaseous medium further minimizes the fire hazard and the risk of explosions.

In drying step (a) the water content of the cellulose/plastic waste mixture is typically reduced to 15 wt% or less, preferably the water content is reduced to a value of about 10 wt% or less, even more preferably the water content is reduced to a value of about 7.5 wt% or less and most preferably to a value of about 5 wt% or less. Generally, the amount of water is about 1% or more, as it is economically not attractive to dry any further. Preferably, the amount of residual moisture is about 2 weight% or more. A substantially dry product is important for further treatment of the waste stream. By thoroughly drying, it becomes possible to effectively clean the waste in the further wind-sifting step.

The gaseous medium that exits the drying unit, together with the dried particulate cellulose/plastic waste mixture is passed to the purification stage in step (b).

The exit temperature of the gaseous medium depends on its entry temperature and the initial and final water content of the cellulose/plastic waste mixture and is generally about 390 K (117°C) or less. Typically the exit temperature of the gaseous medium is at most 380 K (107°C), and preferably within the range of from 325 K (52°C) to 375 K (102°C), more preferably from 340 K (67°C) to 370 K (97°C).

The purification stage comprises a wind sifter, a sieve or a combination thereof.

In a preferred embodiment, the waste mixture is directly blown into the wind-sifter. The waste mixture exiting the dryer generally will have a temperature of at most 370 K (97°C), generally about 360 K (87°C) or lower. A maximum waste mixture temperature in this range avoids the smearing of polymeric material on equipment surfaces.

The gaseous medium is substantially the carrier gas in the windsifter. This has as advantage that some further drying can take place, and that the amount of fresh air can be limited to the air needed in the burner. In this way, effluent gas is reduced as well, which is preferred for environmental reasons and costs reasons. Preferably, no fresh gaseous medium is added between the dryer and the windsifter.

The separating step (c) can be performed in equipment for wind sifting (aero classifying) or screening/sieving as known in the art. In the windsifter the particulate cellulose/plastic waste mixture is divided in such a manner that particles heavier (with a higher density) than the particles made of cellulosic and thermoplastic materials drop out as a heavy fraction while the particles made of cellulosic and thermoplastic materials provide a light fraction which is typically collected and separated from the gaseous medium in step (d) by means of a cyclone located downstream of the wind sifter. Whether an individual particle will belong to the light or heavy fraction is determined by the ratio of adhesive forces (originating from its surface area) to its mass. The separating limit between light and heavy fraction can be adjusted as desired, for example by controlling the velocity of the gaseous stream passed through the wind sifter. The person skilled in the art can readily determine the adequate velocity of the gas stream to separate a desired heavy fraction by trial-and-error methods. If the velocity of the gaseous stream resulting from the drying step is insufficient it may be necessary increase the total volume of circulated gas. It is also possible to narrow the diameter of the windsifter, and thereby increase the speed of the gas. The gas velocity in the wind-sifter preferably is about 10 m/s or higher, even more preferred about 15 m/s. Generally, the velocity will be about 30 m/s or lower, preferably about 25 m/s or lower. At such velocities, like for example 16 m/sec, 17 m/sec or 18 m/sec, it has been found that the separation is optimal. Typically, the heavy material is non-combustible and consists of stones, e.g. grit, metals, ceramics, glass and mixtures thereof. In order to achieve a sufficiently high throughput, it is impractical to remove all non-combustible material. In particular, fine sand or glass shreds will be blown through the sifter.

It is an important advantage in the process of the present invention, that the particulate mixture entering the wind-sifter or sieving operation is dry and that the cellulose material is virtually not adhering to the other materials in the mixture any more. This allows for a good separation, without loss of valuable cellulose or plastic material,

In a preferred embodiment of the present invention the gaseous medium that is separated from the purified cellulose/plastic mixture in step (d) is at least partially recycled to the gaseous medium entering the process in step (a). This recycling is advantageous in order to control the oxygen content of the gaseous medium and also favors the energy balance of the present process. Optionally, the water content of the recycle gas stream may be reduced before re-entering the process resulting in a better removal of water from the cellulose/plastic waste mixture. In case the gaseous medium used for the drying step is obtained by burning a hydrocarbon with air the recycled gas may be mixed with the hydrocarbon.

In a preferred embodiment of the present invention, the gas circulation is caused by gas displacement apparatus, like fans, upstream of the windsifter. This has as advantage that the dryer and the windsifter are easily kept under slight under pressure. Thereby, dusting of the environment is largely precluded. The gas displacement apparatus preferably is positioned at a place between the wind-sifter and the gas-purge. More preferably, the gas displacement apparatus is positioned at a place between the wind-sifter and the product separators.

Preferably, part of the gas stream is recycled in order to achieve lowered oxygen content. Generally, about 30% or more of the gas stream is recycled, more preferably about 50% of the gas stream, and even more preferably, about 60% of the gas stream. Generally, about 5% or more of the stream is purged, as to allow 5% or more fresh air for the burner. Preferably, about 10% or more of the gas is purged, and even more preferred, about 20% or more of the gas is purged, and most preferred, about 30% or more of the gas is purged.

In a further preferred embodiment of the invention, the gas circulation system comprises a heat exchanger to cool the gaseous medium after separation of the particulate matter. Fresh air can be heated in the heat exchanger. Cooling has the advantage, that some moisture condenses, and that the recirculated gas has a larger capacity of drying. In this way, the total recirculation of gas can be lowered.

Although the dried and purified mixture obtained after step (d) may be used as such, for example in sheet material for building applications, it is preferably further processed to useful fuel, preferably secondary fuel.

The waste stream after drying and removing heavier particles, preferably also is subjected to a sorting step wherein chlorine containing polymers, like PVC and PVDC, are removed or further removed. This can be achieved with a NIR (near-infra-red) analysis apparatus, coupled with an automatic removal system. In the present invention, it has an advantage to perform this step on the dried waste stream, because the plastics and cellulose materials do not stick into large lumps, so sorting is most effective. In the present invention, it is preferred to obtain a fuel with less than 0.4 wt% of chlorine.

While the removal of fine non-combustion material may be achieved with use of a sieving operation alone, the initial treatment of the waste stream with a wind sifter is preferred. It appears that a wind sifter is efficient in removing heavy parts (including PVC and PVDC) with relatively low surface area per mass. However, shatters of glass and small sand particles are more effectively removed from the well dried waste stream through screening/sieving. Screening appears not very efficient with a moist stream, as sand and shattered glass particles stick to the cellulose materials. Screening may be done with a sieve having a mesh width of 5 mm or less, preferably about 4 mm or less and more preferably about 3 mm, although higher and lower mesh values may be used.

In a further preferred embodiment, the process comprises a further metal-removing step. In the dried material, small metal particles, like clamps and paper-clips now can be removed effectively.

Depending on the size of the particles in the waste stream, it may be preferred to further shred the particles. For use as secondary fuel, typically, the cellulose/plastic waste mixture for consists of particles having a maximum particle size of 80 mm, preferably 50 mm and more preferably 30 mm. If present, larger particles made of cellulose or thermoplastic material may be shredded or otherwise reduced to the desired particle size.

The mixed-waste fuel material obtained with a process according to the present invention preferably has an energy content of about 18 GJ/ton or more, preferably about 20 GJ/ton or more and even more preferably about 22 GJ/ton or more. Generally, the caloric value will be about 35 GJ/ton or less, preferably, about 32 GJ/ton or less.

Further processing of the particulate cellulose/plastic mixture includes compacting in step (e) before storage. This compacting process is preferably performed in a pelletizing device producing pellets having a diameter of at most 10 mm, more preferably at most 8 mm and most preferably at most 6 mm. This process is described in detail in EP-A-1,083,212 as well as in US-A-5,342,418. The resulting pellets can be easily stored and transported to the location for further use.

In another embodiment, compacting is performed to pellets of a diameter of about 25 mm or less, in soft pellets. Such pellets can be quite well transported, and can for example be used in cement kilns. Alternatively, the mixture is shredded into a "fluff" and directly fed into the furnace or kiln.

Preferably, the resulting pellets are used as secondary fuel in a combustion unit. This can be any unit, but one of the preferred possibilities is the use of these pellets in a power station which is fired with pulverized coal as primary fuel. In order to be useful as secondary fuel in combination with pulverized coal the pellets have to be reduced in size. Therefore, the pellets are preferably comminuted to a powder in step (f) before they are used as secondary fuel. It is advantageous to ground the pellets by means of an air turbulence mill.

By performing an integrated process as per the present invention, the infrastructural problems of dealing with the fluffy material of the drying process are overcome: ease of transport of the dried mixture and ease of mixing with the primary fuel of the combustion unit.

An integrated benefit of the teachings of the present invention can be achieved when the drying process and the combustion unit are located close to each other. Then, part of the heat, generated in the combustion unit, can be used to preheat the cellulose/plastic waste mixture and/or the gaseous medium and/or the feedstock used to obtain said gaseous medium. Also, part of the dried cellulose/plastic mixture itself can be used as feedstock for the preparation of the gaseous medium with which the incoming wet cellulose/plastic waste mixture is dried.

### DETAILED DESCRIPTION OF THE FIGURES:

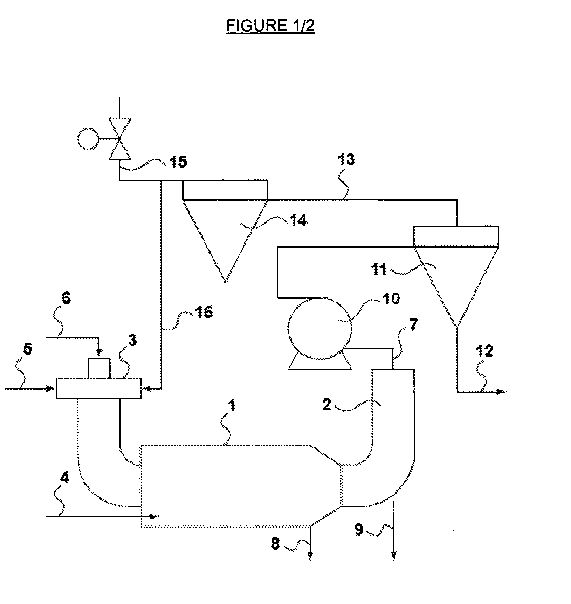

Figure 1 is a schematic drawing of the dryer and windsifter section according to the present invention. In Figure 1, (1) is the rotating drum dryer, directly connected to the wind-sifter (2). In the burner (3), gas or oil can be burned, entering through line (6), with oxygen present in recycled gaseous medium (16) and fresh air (5). The heated gaseous medium is entering the trammel, while a moist particulate waste stream is entering via line (4). As result of the drying and wind sifting, a stream of particulate matter, cleaned from heavy non-combustible material is blown through line (7). Heavy non-combustible matter partly is collected from the bottom of the rotating drum dryer (8), and from the bottom of the wind-sifter (9). The main stream is transported by action of the transport-ventilating system (10). The particulate matter from the stream is separated from the gaseous medium in one or more cyclones (11). The waste stream having dry and purified cellulose and plastic particles is processed further via line (12). The gaseous medium (13) is cleaned from dust in one or more cyclones (14), and part (16) thereof is recycled to the burner, whereas part (15) is purged.

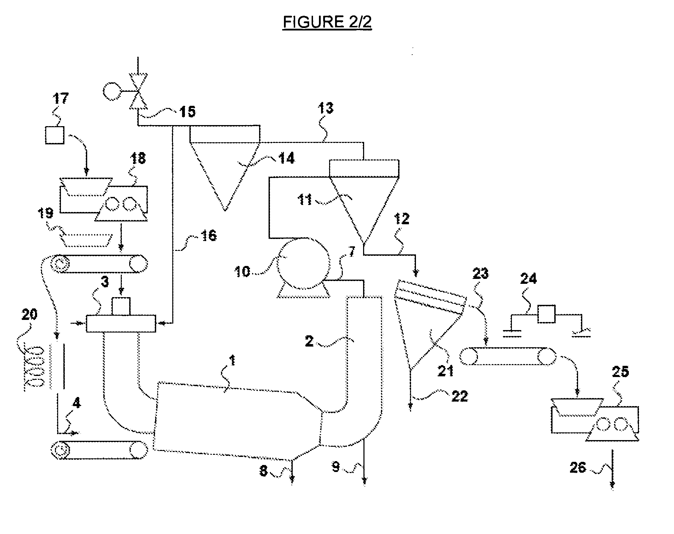

Figure 2 depicts a scheme to treat waste streams in order to obtain fluffy material that can be used as fuel or can be further processed to fuel pellets. Like numerals have like meaning as in Figure 1. At the inlet side, (17) depicts the incoming waste stream, which is shredded in shredder (18) to for example particle size of less than 150 mm, preferably less than 100 mm. The stream is thereafter subjected to separation of metal with magnets (19) and eddy current device (20). On the back-end, the stream (12) is screened over a 3-4 mm screen (21), separating sand and glass shreds (22) from the cellulose/plastic mixture (23). The cellulose/plastic mixture can be subjected to PVC-sorting by an automatic sorter (24). The now very clean mixture can be used as such, but preferably is further shredded to for example less than 30 mm or less than 40 mm particles in shredder (25). An additional metal removal step (not shown) may also be included. The resulting fluffy stream (26) can be used as such, but can also very advantageously be used in a pelletizing process as e.g. described in EP 1083212.

The invention will be further elucidated by the following examples, which should not be considered as limiting the invention.

### EXAMPLES 1-4

A feed consisting mainly of contaminated paper and plastic, derived from municipal waste, was shredded to pieces of about 100 mm or smaller. The waste stream was transported through a magnet, and eddy current device to remove metals. The stream was transported to a rotating drum dryer. The vessel was tilted 5° with respect to the horizontal, (the inlet is higher than the outlet). This causes the heavy particles of a few cm to fall out at the end. The inlet heated gas generally has a temperature of above about 423 K (150 °C) or higher and about 523 K (250 °C) or lower. The dried waste was directly transported into a windsifter. No smearing of plastic was observed on the equipment surfaces. Heavy particles were collected at the bottom, whereas the lighter fraction, mainly consisting of cellulose fibres and plastic, was collected in two cyclones. The dryer was a vessel of about 20 meter long, and 4 m in diameter, with internals was used. The burner was set to use 640 cubic meters methane gas per hour, with an air feed of 33360 cubic meters. The outlet of product was about 12.3 ton/hr. Gas from the two main-product cyclones was cleaned over dust-cyclones, and split. One stream was purged, and another part was recycled to the burner. This has the advantage that the oxygen content will be lowered, significantly reducing the risk of explosion or fire. Secondly, the recycled gas stream is quite warm, lowering the heat input to obtain the necessary temperature. Table 1 summarizes some of the test data. The split fraction is the part of the off-gas that is purged. The figures disregard inert material, as the heat capacity of the inert material is very low, and generally they do not comprise moisture.

**Table 1**

| Parameter | Ex 1 | Ex 2 | Ex 3 | Ex 4 |
|---|---|---|---|---|
| Product feed | | | | |
| Paper (wt%) | 36.25 | 36.25 | 36.25 | 36.25 |
| Moisture (wt%) | 31.0 | 31.0 | 31.0 | 31.0 |
| Plastic (wt%) | 32.75 | 32.75 | 32.75 | 32.75 |
| Dryer feed | | | | |
| Gas temp (°C) | 200 | 250 | 150 | 180 |
| Flow (1000 ton/h) | 131 | 95 | 240 | 156 |
| Oxygen (%) | 15.7 | 16.1 | 15.2 | 15.5 |
| Water flow (t/h) | 9.4 | 5.1 | 22.3 | 12.7 |
| Split factor (%) | 47 | 64 | 26 | 39 |
| Dryer outlet | | | | |
| Product temperature (°C) | 73 | 72 | 75 | 74 |
| Gas temperature (°C) | 102 | 104 | 100 | 102 |
| Moisture (%) | 4.6 | 4.8 | 4.4 | 4.5 |

About 1% by weight (relative to the solid materials) of heavy materials was collected at the bottom of the dryer. The waste stream was directly blown into a vertical pipe of 20 m high, and 1.7 m diameter. The gas flow was about 18 m/s. About 1 wt% of heavy material was collected at the bottom. The amounts of heavy material collected will be dependent on the pretreatment of the waste stream, and the amount may be higher or lower. In any case, the dry mixture allows for efficient separation of heavy material.

The gas and waste mixture was forced to flow with the aid of two transport-ventilators. Thereafter, the main waste stream was separated from the gas stream in two consecutive cyclones.

Small non-combustible material was removed from the particulate waste stream by passing the resulting stream over a sieve; for which a moving sieve with a 3 mm mesh screen was used. About 2 wt% of fine sand and glass shreds were separated off. The waste stream thereafter was transported to a shredder that cut the particles into parts of about 30 mm maximum length and width.

The resulting clean waste stream was converted into solid particles by pressing through a die having an effective hole length (L) to hole diameter (D) of greater than 5 and preferably greater than 7, wherein the temperature of the mixture was raised to about 100-115°C or even up to 120 °C, depending on the waste stream, and the speed of the press. The resulting pellets comprised for about 97 wt% or more, generally about 98 wt% or more of (semi-molten) plastic and organic/cellulose fibrous material.

### EXAMPLES 5-8

In an analogues way to examples 1-4, further processes were performed. The drying step is shown in table 2. In examples 7 and 8, the amount of natural gas used was 580 and 510 Nm³/h respectively. Moisture of the product feed mixture was adjusted in Example 5 & 6, such that a total moisture content of 31 wt% was maintained in the product feed mixture. Experiments using reduced moisture content lead to an increase in temperature of the product and gaseous medium at the dryer outlet. Experimental observations indicated that, under the specific process parameters used, a moisture content of at least 15 wt% is preferred to ensure that the outlet product temperature was not high enough to cause smearing of the equipment surfaces.

**Table 2**

| Parameter | Ex 5 | Ex 6 | Ex 7 | Ex 8 |
|---|---|---|---|---|
| Product feed | | | | |
| Paper (wt%) | 5.0 | 65.0 | 36.25 | 36.25 |
| Moisture (wt%) | 31.0 | 31.0 | 31.0 | 31.0 |
| Plastic (wt%) | 64.0 | 4.0 | 32.75 | 32.75 |
| Dryer feed | | | | |
| Gas temp (°C) | 200 | 200 | 157 | 132 |
| Flow (1000 ton/h) | 119 | 140 | 156 | 168 |
| Oxygen (%) | 15.7 | 15.7 | 15.3 | 15.0 |
| Water flow (t/h) | 8.5 | 9.8 | 13.9 | 16.3 |
| Split factor (%) | 51 | 43 | 30 | 25 |
| Dryer outlet | | | | |
| Product temperature (°C) | 67 | 77 | 66 | 61 |
| Gas temperature (°C) | 84 | 104 | 81 | 66 |
| Moisture (%) | 0.6 | 5.6 | 4.5 | 6.5 |

## Claims

1. A method for processing a particulate cellulose/plastic waste mixture comprising:
• cellulosic materials;
• thermoplastic materials comprising at least 60 wt% of polyethylene homo- and/or copolymers;
• particles heavier than the particles made of cellulosic and thermoplastic materials; and
• a moisture content of 15 wt% or more
the method comprising the steps:
(a) drying the cellulose/plastic waste mixture by treatment with a hot gaseous medium having a temperature of in the range of 425 to 525 K,
(d) passing the dried cellulose/plastic waste mixture and the gaseous medium having a temperature of 390 K or lower to a purification stage, and
(e) subjecting the dried cellulose/plastic waste mixture to the action of the purification stage in order to separate particles heavier than the particles made of cellulosic and thermoplastic materials,
wherein the purification stage comprises a wind sifter, a sieve or a combination thereof.

2. The method according to claim 1, wherein the dried cellulose/plastic waste mixture has a moisture content of from 1 to 15 wt%.

3. The method according to claim 1 or 2, wherein the residence time of the hot gaseous medium is from 3 seconds to 5 minutes.

4. The method according to any one of the preceding claims, wherein in step (a) the cellulose/plastic waste mixture and the gaseous medium are cocurrently passed through a vessel.

5. The method according to any one of claims 1 to 4, wherein the hot gaseous medium has an oxygen content of greater than 3 volume %.

6. The method according to any one of the preceding claims, wherein the materials heavier than the cellulosic and thermoplastic material comprise metals, stones, ceramics, glass or thermosetting plastics.

7. The method according to any one of the preceding claims further comprising (d), separating the purified cellulose/plastic mixture and the gaseous medium by the action of a cyclone.

8. The method according to any one of the preceding claims, wherein the cellulose/plastic waste mixture is pretreated prior to step (a) by mechanical pressing in order to reduce the water content.

9. The method according to any one of the preceding claims, wherein the cellulose/plastic waste mixture comprises 5 to less than 40 wt% of thermoplastic material, based on the total dry weight of cellulosic and thermoplastic materials.

10. The method according to any of claims 1 to 8, wherein the cellulose/plastic waste mixture comprises 40 to 85 wt% of thermoplastic material based on the total dry weight of cellulosic and thermoplastic materials.

11. A method according to any one of the preceding claims, wherein the purification step comprises a wind sifter.

12. A method according to any one of the preceding claims, wherein the temperature of the hot gaseous medium is obtained through heating a preheated gaseous medium with the use of steam.

13. A method according to any one of the preceding claims, wherein the weight ratio of cellulose to plastic waste is at least 2:3.

## Patentansprüche

1. Verfahren zum Verarbeiten einer teilchenförmigen Cellulose-/Plastikmüllmischung, umfassend:
• cellulosische Materialien;
• thermoplastische Materialien, umfassend mindestens 60 Gew.-% Polyethylenhomo- und/oder -copolymere;
• Teilchen, die schwerer sind als die Teilchen, die aus cellulosischen und thermoplastischen Materialien hergestellt sind; und
• einen Feuchtigkeitsgehalt von 15 Gew.-% oder mehr
wobei das Verfahren folgende Schritte umfasst:
(a) das Trocknen der Cellulose-/Plastikmüllmischung durch Behandlung mit einem heißen gasförmigen Medium, das eine Temperatur im Bereich von 425 bis 525 K aufweist,
(b) das Zuführen der getrockneten Cellulose-/Plastikmüllmischung und des gasförmigen Mediums, das eine Temperatur von 390 K oder darunter aufweist, zu einer Reinigungsstufe und
(c) das Unterwerfen der getrockneten Cellulose-/Plastikmüllmischung der Wirkung der Reinigungsstufe, um Teilchen abzutrennen, die schwerer sind als die Teilchen, die aus cellulosischen und thermoplastischen Materialien hergestellt sind,
wobei die Reinigungsstufe einen Windsichter, ein Sieb oder eine Kombination davon umfasst.

2. Verfahren nach Anspruch 1, wobei die getrocknete Cellulose-/Plastikmüllmischung einen Feuchtigkeitsgehalt von 1 bis 15 Gew.-% aufweist.

3. Verfahren nach Anspruch 1 oder 2, wobei die Aufenthaltszeit des heißen gasförmigen Mediums 3 Sekunden bis 5 Minuten beträgt.

4. Verfahren nach einem der vorhergehenden Ansprüche, wobei in Schritt (a) die Cellulose-/Plastikmüllmischung und das gasförmige Medium gleichzeitig durch ein Gefäß geführt werden.

5. Verfahren nach einem der Ansprüche 1 bis 4, wobei das heiße gasförmige Medium einen Sauerstoffgehalt von mehr als 3 Volumen-% aufweist.

6. Verfahren nach einem der vorhergehenden Ansprüche, wobei die Materialien, die schwerer als die cellulosische und thermoplastische Materialen sind, Metalle, Steine, Keramikmaterialien, Glas oder duroplastische Kunststoffe umfassen.

7. Verfahren nach einem der vorhergehenden Ansprüche, des Weiteren Schritt (d) das Trennen der gereinigten Cellulose-/Plastikmüllmischung und des gasförmigen Mediums durch die Wirkung eines Zyklons umfassend.

8. Verfahren nach einem der vorhergehenden Ansprüche, wobei die Cellulose-/Plastikmüllmischung vor Schritt (a) durch mechanisches Pressen vorbehandelt wird, um den Wassergehalt zu reduzieren.

9. Verfahren nach einem der vorhergehenden Ansprüche, wobei die Cellulose-/Plastikmüllmischung 5 bis weniger als 40 Gew.-% thermoplastische Material, auf das gesamte Trockengewicht von cellulosischen und thermoplastischen Materialien bezogen, umfasst.

10. Verfahren nach einem der Ansprüche 1 bis 8, wobei die Cellulose-/Plastikmüllmischung 40 bis 85 Gew.-% thermoplastische Material, auf das gesamte Trockengewicht der cellulosischen und thermoplastischen Materialien bezogen, umfasst.

11. Verfahren nach einem der vorhergehenden Ansprüche, wobei der Reinigungsschritt einen Windsichter umfasst.

12. Verfahren nach einem der vorhergehenden Ansprüche, wobei die Temperatur des heißen gasförmigen Mediums durch Erhitzen eines vorerhitzten gasförmigen Mediums unter Verwendung von Dampf erreicht wird.

13. Verfahren nach einem der vorhergehenden Ansprüche, wobei das Gewichtsverhältnis von Cellulose zu Plastikmüll mindestens 2:3 beträgt.

## Revendications

1. Procédé pour le traitement d'un mélange particulaire de déchets de cellulose/plastique comprenant :
- des matières cellulosiques ;
- des matières thermoplastiques comprenant au moins 60 % en poids d'homopolymères et/ou copolymères de polyéthylène ;
- des particules plus lourdes que les particules constituées de matières cellulosiques et thermoplastiques ; et
- une teneur en humidité supérieure ou égale à 15 % en poids,
le procédé comprenant les étapes :
(a) de séchage du mélange de déchets de cellulose/plastique par traitement avec un milieu gazeux chaud ayant une température dans la plage de 425 à 525 K,
(b) de passage du mélange de déchets de cellulose/plastique séché et du milieu gazeux ayant une température inférieure ou égale à 390 K vers une étape de purification et
(c) de soumission du mélange de déchets de cellulose/plastique séché à l'action de l'étape de purification afin de séparer des particules plus lourdes que les particules constituées de matières cellulosiques et thermoplastiques,
dans lequel l'étape de purification comprend un séparateur à air, un crible ou une association de ceux-ci .

2. Procédé selon la revendication 1, dans lequel le mélange de déchets de cellulose/plastique séché a une teneur en humidité de 1 à 15 % en poids.

3. Procédé selon la revendication 1 ou 2, dans lequel le temps de séjour du milieu gazeux chaud est de 3 secondes à 5 minutes.

4. Procédé selon l'une quelconque des revendications précédentes, dans lequel dans l'étape (a) le mélange de déchets de cellulose/plastique et le milieu gazeux sont amenés à passer à cocourant dans une cuve.

5. Procédé selon l'une quelconque des revendications 1 à 4, dans lequel le milieu gazeux chaud a une teneur en oxygène supérieure à 3 % en volume.

6. Procédé selon l'une quelconque des revendications précédentes, dans lequel les matières plus lourdes que les matières cellulosiques et thermoplastiques comprennent des métaux, des pierres, des céramiques, du verre ou des plastiques thermodurcissables.

7. Procédé selon l'une quelconque des revendications précédentes comprenant en outre étape (d) la séparation du mélange de cellulose/plastique purifié et du milieu gazeux par l'action d'un cyclone.

8. Procédé selon l'une quelconque des revendications précédentes, dans lequel le mélange de déchets de cellulose/plastique est prétraité avant l'étape (a) par pressage mécanique afin de réduire la teneur en eau.

9. Procédé selon l'une quelconque des revendications précédentes, dans lequel le mélange de déchets de cellulose/plastique comprend de 5 à moins de 40 % en poids de matière thermoplastiques, sur la base du poids sec total des matières cellulosiques et thermoplastiques.

10. Procédé selon l'une quelconque des revendications 1 à 8, dans lequel le mélange de déchets de cellulose/plastique comprend 40 à 85 % en poids de matière thermoplastiques, sur la base du poids sec total des matières cellulosiques et thermoplastiques.

11. Procédé selon l'une quelconque des revendications précédentes, dans lequel l'étape de purification comprend un séparateur à air.

12. Procédé selon l'une quelconque des revendications précédentes, dans lequel la température du milieu gazeux chaud est obtenue par chauffage d'un milieu gazeux préchauffé à l'aide de vapeur d'eau.

13. Procédé selon l'une quelconque des revendications précédentes, dans lequel le rapport en poids des déchets de cellulose aux déchets de plastique est d'au moins 2:3.
